# EUROPÄISCHE PATENTSCHRIFT

(11) **EP 2 860 026 B1**
(45) Veröffentlichungstag und Bekanntmachung des Hinweises auf die Patenterteilung: **27.04.2016**
(21) Anmeldenummer: 14003438.0
(22) Anmeldetag: 07.10.2014
(51) Int. Cl.: B32B 5/02, B32B 5/30, B32B 37/14, B32B 3/12

(54) **Polymerverbundwerkstoff und Verfahren zu dessen Herstellung**
Polymer composite and method for producing the same
Matière composite polymère et son procédé de fabrication

(30) Priorität: 08.10.2013 DE 102013016579
(43) Veröffentlichungstag der Anmeldung: 15.04.2015
(73) Patentinhaber: MTA oHG, 92345 Dietfurt (DE)
(72) Erfinder: Koller, Max, 92345 Dietfurt (DE)
(74) Vertreter: Witzany, Manfred

(56) Entgegenhaltungen:
- DE-A1- 4 412 636
- DE-A1- 19 902 368
- US-A1- 2011 274 915

## Beschreibung

Die Erfindung betrifft einen Polymerverbundwerkstoff, der zugfeste Fasern und mindestens ein diese Fasern einbindendes Polymer aufweist. Außerdem betrifft die Erfindung ein Verfahren zur Herstellung dieses Polymerverbundwerkstoffes, ein Verfahren zur Herstellung eines Formteils aus diesem Polymerverbundwerkstoff sowie ein nach diesem Verfahren hergestelltes Formteil.

Aus der DE 20 2008 016 405 U ist ein Leichtbauformteil bekannt. Dieses besteht aus einer Wabe aus zellulosehaltigem Material, an dem vorzugsweise beidseitig ein gattungsgemäßer Polymerverbundwerkstoff bestehend aus zugfesten Fasern, die miteinander mittels eines Polymers eingebunden sind, vorgesehen ist. Die Fasern bestehen dabei aus Glas oder Karbon und verlaufen über die gesamte Länge des Leichtbauformteils. Da diese Fasern zugfest sind, wirken sie einer Durchbiegung des Leichtbauformteils entgegen und verstärken dieses erheblich. In bestimmten Anwendungsfällen wird der faserverstärkte Verbundwerkstoff auch ohne zusätzliche Wabe eingesetzt. Auch in derartigen Anwendungsfällen sorgen die Fasern für eine erhebliche Versteifung des Polymerwerkstoffes.

Aus der US 2011/0274915 A1 ist ein Verfahren zur Herstellung einer Sandwich-Platte bekannt. Dabei werden geschredderte Kunststoffabfälle zwischen zwei thermoplastischen Folien aus Polyethylen eingeschweißt. Hierzu wird die erste thermoplastische Folie mit den geschredderten Kunststoffabfällen bestreut und anschließend mit der zweiten Kunststofffolie abgedeckt. Anschließend wird der so gebildete Sandwich bis zur Erweichungstemperatur der thermoplastischen Schichten getempert.

Aus der DE 44 12 636 A1 ist ein gattungsgemäßes Verfahren zur Herstellung von Halbzeugmatten bekannt. Dabei wird eine Trägerschicht in Form einer Folien- oder Mattenbahn kontinuierlich von einer Vorratsrolle abgezogen und mit einem Klebstoff besprüht. Anschließend wird auf diese Klebstoffschicht ein Granulat aus geschredderten Kunststoffabfällen gestreut. Auf diese wird eine weitere mit Klebstoff besprühte Folienbahn gezogen und auf die Granulatschicht aufkaschiert. Um eine gute Klebeverbindung zu erzeugen, wird der auf diese Weise erzeugte Schichtverbund einer erhöhten Temperatur ausgesetzt.

Der Erfindung liegt die Aufgabe zugrunde, einen Polymerverbundwerkstoff der eingangs genannten Art zu schaffen, der kostengünstiger ist. Außerdem soll ein Verfahren zur Herstellung dieses Polymerverbundwerkstoffes angegeben werden, welches ebenfalls kostengünstig ist. Schließlich soll ein Verfahren zur Herstellung eines Formteils aus diesem kostengünstigen Polymerverbundwerkstoff sowie ein mit diesem Verfahren hergestelltes Formteil angegeben werden.

Diese Aufgaben werden mit den folgenden Merkmalen gelöst.

Der erfindungsgemäße Polymerverbundwerkstoff weist zugfeste Fasern und mindestens ein diese verbindendes Polymer auf. Als Fasern haben sich insbesondere Glas- und Karbonfasern bewährt, wobei der Erfindungsgegenstand nicht auf diese Werkstoffe beschränkt ist. Das einbindende Polymer kann ein duroplastisches oder thermoplastisches Polymer sein. Thermoplastisches Polymer hat den Vorteil, dass es sehr einfach wieder aufgeschmolzen werden kann, ohne dass die Molekularstruktur hierbei beschädigt wird. Dies ist beim duroplastischen Polymer nicht möglich. Dafür besitzt duroplastisches Polymer eine wesentlich größere Steifigkeit und bindet auch die verstärkenden Fasern erheblich besser ein. Aus diesem Grund wird den duroplastischen Polymeren oftmals der Vorzug gegeben.

Da sowohl die zugfesten Fasern als auch das duroplastische Polymer erhebliche Kostenfaktoren darstellen, sind aus diesem Polymerverbundwerkstoff hergestellte Formbauteile in der Regel teuer. Beispielsweise in der Automobilindustrie stehen diese Polymerverbundwerkstoffe in direkter Konkurrenz mit Stahlblech, welches erheblich preisgünstiger ist. Außerdem lässt sich Stahlblech zu 100 % durch Einschmelzen wiederverwerten, so dass dem Stahlblech auch mit Blick auf Umweltschutzaspekte Vorzug gegeben wird. Polymerverbundwerkstoffe in Altfahrzeugen müssen dagegen kostenaufwendig durch den Hersteller entsorgt werden. Gleiches betrifft auch Abfallstücke, wie beispielsweise über die Formteile überstehende Ränder oder Produktionsausschüsse, die ebenfalls nicht wiederverwendet werden können und folglich kostenaufwendig entsorgt werden müssen. Um sich gegen die Stahlblechkonkurrenz wirksam durchsetzen zu können, muss der Polymerverbundwerkstoff wesentlich kostengünstiger werden.

Zur Lösung dieses Problems wird wenigstens ein Teil des Polymerverbundwerkstoffes aus recyceltem und zerkleinertem, mit Fasern verstärktem Altpolymer gebildet. Dies scheint zunächst widersinnig und wenig Ziel führend zu sein, da durch das Zerkleinern des Altpolymers auch die für die Stabilität des Werkstoffes sorgenden Fasern durchtrennt werden.

Man ging bisher davon aus, dass nur Fasern, die sich über die gesamte Länge bzw. Breite eines Formteils erstrecken, die notwendige Zugstabilität und damit Biegesteifigkeit herstellen können. Es stellte sich aber heraus, dass die kurzen Fasern des Altpolymers zwar eine geringere Formstabilität als Langfasern nach dem Stand der Technik haben, die damit verbundenen Steifigkeitseinschränkungen aber in vertretbaren Grenzen bleiben. In vielen Fällen reicht die verringerte Steifigkeit dennoch aus oder kann durch geringfügige Erhöhung des Flächengewichts des Polymerverbundwerkstoffes sogar ausgeglichen werden. In kritischen Fällen kann es dagegen vorteilhaft sein, nur einen Teil des mit Fasern verstärkten Polymers aus recyceltem Altpolymer herzustellen, was die Biegesteifigkeit dann entsprechend erhöht. Vorzugsweise befindet sich in diesem Fall die Schicht aus recyceltem Altpolymer in der Mitte oder auf der Schubseite des Polymerverbundwerkstoffes. Damit bleibt die negative Auswirkung des recycelten Altpolymers mit den entsprechend verkürzten Fasern sehr gering.

Es hat sich aber herausgestellt, dass ein wesentliches Problem im schwierigen Hantieren des recycelten und zerkleinerten Altpolymers besteht. Polymerverbundwerkstoffe nach dem Stand der Technik werden derart hergestellt, dass die einzusetzenden Fasern zu Matten vernäht werden, die dann in entsprechende Formen eingelegt und mit dem Polymer verspritzt werden. Dagegen lässt sich das als Schüttgut vorliegende, zerkleinerte Altpolymer nicht vernünftig hantieren. Ein Vernähen zu Matten scheiterte an ständigen Nadelbrüchen, die durch das harte Altpolymer hervorgerufen wurden. Während Fasern den Nadeln ausweichen, stoßen die Nadeln direkt gegen das harte Altpolymer und brechen ab.

Zur Lösung dieses weiteren Problems wird das zerkleinerte Altpolymer zwischen zwei Lagen aus mindestens einem thermoplastischen Polymer eingeschweißt. Dieses thermoplastische Polymer bindet die einzelnen Stücke aus Altpolymer über eine Schweißverbindung, so dass der Polymerverbundwerkstoff insgesamt als Matte oder Platte vorliegt. Damit lässt sich dieser Polymerverbundwerkstoff in gleicher Weise wie zu Matten vernähte Fasern hantieren. Folglich müssen beim Einsatz dieses Polymerverbundwerkstoffes keine Änderungen im Produktionsprozess von Formteilen vorgenommen werden.

Durch den Einsatz dieses Polymerverbundwerkstoffes wird einerseits teueres Faser- und Polymermaterial eingespart, andererseits aber zusätzlich faserverstärktes Altpolymer eingesetzt. Damit reduzieren sich zum einen die Materialkosten für den Polymerverbundwerkstoff. Andererseits entfallen auch die Deponiekosten für zu entsorgende Formteile aus faserverstärktem Polymerwerkstoff, Abfallstücken und Produktionsausschüssen. Folglich kann dieser Polymerverbundwerkstoff wesentlich kostengünstiger als bekannter Polymerverbundwerkstoff hergestellt werden. Je nach konkretem Anwendungsfall können die Kosten des Polymerverbundwerkstoffes auch beträchtlich unter die Kosten von entsprechenden Stahlblechteilen fallen, was die Einsatzmöglichkeiten dieses neuen Polymerverbundwerkstoffes beträchtlich verbessert.

Mindestens eine der Lagen ist flüssigkeitsdurchlässig. Damit kann der Polymerverbundwerkstoff nachträglich mit einem Harz durchtränkt werden, um die einzelnen Stücke des zerkleinerten faserverstärkten Altpolymers miteinander zu binden. Außerdem lässt sich auf diese Weise der Polymerverbundwerkstoff leicht mit anderen Werkstoffen verbinden, um komplexere Formteile aufzubauen. Dabei ist es wichtig, dass die Lage auch nach dem Schweißvorgang noch flüssigkeitsdurchlässig bleibt.

Für das mindestens eine thermoplastische Polymer haben sich Polyethylen und Polypropylen bewährt. Diese Polymere besitzen hinreichend niedrige Schmelzpunkte und damit auch hinreichend niedrige Plastifizierungspunkte, so dass sehr einfach eine entsprechende Schweißverbindung zwischen der mindestens einen Lage und dem faserverstärkten Altpolymer entsteht. Aufgrund der Dehnungselastizität von Polyethylen und Polypropylen trägt allerdings die Lage praktisch nicht zur Zugfestigkeit des Polymerverbundwerkstoffes bei.

Vorzugsweise ist die mindestens eine flüssigkeitsdurchlässige Lage von einem Spinnvlies gebildet. Dieses lässt sich besonders einfach und damit kostengünstig herstellen. Das Spinnvlies hält die einzelnen Stücke aus dem Altpolymer gut zusammen und ist auch nach dem Schweißvorgang flüssigkeitsdurchlässig.

Insbesondere bei stärker belasteten Anwendungen ist es günstig, wenn wenigstens ein Teil der Fasern mindestens 10 cm lang ist. Vorzugsweise reichen diese Fasern über eine Länge, die mindestens der Länge eines aus diesem Polymerverbundwerkstoff zu erstellenden Formteils entspricht. Diese Langfasern werden üblicherweise nicht von recyceltem Material gewonnen und sind daher entsprechend kostenaufwendiger. Sie werden vorzugsweise an einer oder beiden Außenseiten des Polymerverbundwerkstoffes untergebracht.

Zur Bindung der Altpolymerstücke hat sich ein unvernetztes, duroplastisches Harz bewährt. Dieses unvernetzte, duroplastische Harz durchtränkt den Polymerverbundwerkstoff und führt nach dem Aushärten zu den gewünschten stabilen mechanischen Eigenschaften. Wird der Polymerverbundwerkstoff unmittelbar nach dessen Erstellung zu einem entsprechenden Formteil weiterverarbeitet, so kann jedes beliebige Harz eingesetzt werden. Vorzugsweise wird ein Zweikomponentenharz genutzt. Damit ist allerdings die Verarbeitungszeit für den Polymerverbundwerkstoff entsprechend beschränkt. Vorzugsweise wird in diesem Fall das Harz in der Pressform zugesetzt. Soll dagegen der Polymerverbundwerkstoff nach seiner Erstellung einschließlich dem bindenden Harz über längere Zeit zwischengelagert oder ausgeliefert werden, so wird als unvernetztes Harz ein thermisch aktivierbares Harz eingesetzt. Derartige Harze polymerisieren erst nachdem ein entsprechender Temperschritt ausgeführt wurde, durch den das Harz aktiviert wird. Ein derartiges thermisch aktivierbares Harz kann bereits vorab dem faserverstärktem Altpolymer zugefügt werden, ohne die Lagerfähigkeit des Polymerverbundwerkstoffes zu beeinträchtigen.

Bei einem Verfahren zur Herstellung des oben genannten Polymerverbundwerkstoffes wird zunächst Altpolymer, welches mit Fasern verstärkt ist, zerkleinert. Dieses zerkleinerte Altpolymer wird dann auf eine der Lagen aus dem thermoplastischen Polymer aufgebracht, vorzugsweise aufgestreut. Vorzugsweise werden unterschiedliche Siebfraktionen des Altpolymers gemischt, um auf diese Weise eine größere Dichte des Altpolymers zu erzielen. Dabei wird der Effekt ausgenutzt, dass sich kleine Teilchen des Altpolymers in die Hohlräume zwischen den großen Teilchen einfügen. Anschließend wird eine weitere der Lagen aus dem thermoplastischen Polymer auf die Schüttung des zerkleinerten Altpolymers aufgebracht, so dass die Lagen aus dem thermoplastischen Polymer zusammen mit dem dazwischen liegenden, zerkleinerten Altpolymer ein Sandwich bilden. Dieser Sandwich wird anschließend einem Temperschritt unterworfen, bei dem die Lagen aus dem thermoplastischen Polymer über deren Plastifizierungstemperatur erhitzt und anschließend wieder unter die Plastifizierungstemperatur abgekühlt werden. Auf diese Weise wird das thermoplastische Polymer mit dem zerkleinerten Altpolymer verschweißt, so dass sich eine leicht hantierbare Matte oder Platte ergibt. Diese kann dann zu entsprechenden Formteilen weiterverarbeitet werden.

Für das Zerkleinern des Altpolymers hat sich schreddern bzw. mahlen bewährt. Beim Schreddern werden auch große Teile aus Altpolymer rasch mittels entsprechender Schläger zerkleinert. Diesen Schlägern ist außenseitig ein Sieb zugeordnet, welches lediglich Teilstücke einer bestimmten Höchstgröße durchlässt. Damit werden die Bruchstücke solange zerkleinert, bis sie kleiner als der Lochdurchmesser dieses Siebes sind. Auf diese Weise kann die Teilegröße in weiten Grenzen eingestellt werden. Zur Erzielung einer weiteren Teilchenverkleinerung ist das Schreddern unwirtschaftlich. Hier ist es dann günstiger, das bereits geschredderte Material zu mahlen. Vorzugsweise wird eine geschredderte Fraktion mit einer gemahlten Fraktion vermischt, um eine höhere Altpolymerdichte zu erhalten.

Um den Herstellungsprozess des Polymerverbundwerkstoffes wirtschaftlicher zu gestalten, ist es vorteilhaft, wenn das Aufbringen des zerkleinerten Altpolymers auf die Lage bei sich kontinuierlich bewegter Lage erfolgt. Hierzu hat sich insbesondere eine Streuwalze bewährt, die eine recht gleichmäßige Verteilung des verkleinerten Altpolymers auf der Lage erzielt. Auf diese Weise ergibt sich ein kontinuierlicher Produktionsprozess, der leicht zu handhaben ist. Dabei werden die Lagen auf der Einlaufseite des Produktionsprozesses abgewickelt und der fertige Polymerverbundwerkstoff am Ende des Produktionsprozesses aufgewickelt. Ist das Ende eines Wickels der Lagen erreicht, so wird einfach die nächste Bahn mit diesem Ende verschweißt, ohne den Produktionsprozess unterbrechen zu müssen. Vorzugsweise wird die mit dem zerkleinerten Altpolymer belegte Lage nach dem Aufschütten Schwingungen ausgesetzt, um diese Schüttung noch weiter zu verdichten. Diese Schwingungen können im einfachsten Fall von Transportwalzen ausgeübt werden.

Zur Erzielung einer gleichmäßigen Schüttung aus dem zerkleinerten Altpolymer hat es sich bewährt, wenn das zerkleinerte Altpolymer ein Flächengewicht von mindestens 600 g/m² aufweist. Unterhalb dieses Flächengewichts ist insbesondere bei einem kontinuierlichen Produktionsprozess eine gleichmäßige und dichte Schüttung mit dem zerkleinerten Altpolymer nur noch schwer gewährleistbar.

Bei einem Verfahren zum Herstellen eines Formteils wird dem oben genannten Polymerverbundwerkstoff unvernetztes Harz zugegeben bzw. das bereits enthaltene unvernetzte Harz thermisch aktiviert. Dies führt zu einer dichten Einbettung des zerkleinerten Altpolymers in die Schicht aus unvernetztem Harz. Anschließend wird der so vorbereitete Polymerverbundwerkstoff in einer Form thermisch erhitzt und gepresst. Dabei wird der Polymerverbundwerkstoff in die gewünschte Form gebracht und gleichzeitig das eingebrachte und/oder aktivierte Harz vernetzt. Ein derartiges Formteil hat eine nur geringfügig schlechtere Festigkeit als ein entsprechend erstelltes Formteil ohne Zugabe von Altpolymer. Da der eingesetzte Polymerverbundwerkstoff wie eine Matte oder Platte handhabbar ist, lässt sich dieses Verfahren sehr einfach und damit kostengünstig durchführen.

Zur Erzielung einer hohen Festigkeit des hergestellten Formteils bei gleichzeitig geringem Flächengewicht, ist es vorteilhaft, wenn dem mindestens einen Polymerwerkstoff vor dem Pressvorgang mindestens eine Wabe zugegeben wird. Diese Wabe besteht vorzugsweise aus einem zellulosehaltigen Material. Bei nur einseitiger Belastung des Formteils reicht es aus, nur einseitig den Polymerverbundwerkstoff anzubringen. Bei beidseitiger Belastung ist jedoch die beidseitige Anbringung des Polymerverbundwerkstoffes vorzuziehen. Alternativ ist auch daran gedacht, eine Seite der Wabe mit dem erfindungsgemäßen Polymerverbundwerkstoff und die gegenüberliegende Seite in klassischer Weise aus langen Fasern und neu vernetztem Polymer zu bilden. In diesem Fall ist dann die Seite mit dem erfindungsgemäßen Polymerverbundwerkstoff die schwächere und sollte möglichst im Betrieb des Formteils vorzugsweise nur auf Schub belastet werden.

Ein mit dem oben genannten Verfahren hergestelltes Formteil ist wesentlich kostengünstiger als ein entsprechendes Formteil ohne Einsatz von Altpolymer, da das Altpolymer in der Regel kostenlos zur Verfügung steht. Zusätzlich werden Entsorgungskosten für das Altpolymer eingespart, was die Herstellungskosten dieses Formteils weiter reduziert. Bewährte Herstellungsverfahren für das Formteil und insbesondere bereits vorhandene und bewährte Herstellungswerkzeuge können uneingeschränkt auch bei diesem Verfahren eingesetzt werden.

Der Erfindungsgegenstand und das erfindungsgemäße Verfahren werden beispielhaft anhand der Zeichnung erläutert, ohne den Schutzumfang zu beschränken.

Es zeigt:
- Figur 1: eine räumliche Darstellung eines kleinen Ausschnittes aus einem Polymerverbundwerkstoff,
- Figur 2: ein kleiner,Ausschnitt eines Formteils und
- Figur 3: eine Vorrichtung zur Herstellung des Polymerverbundwerkstoffes.

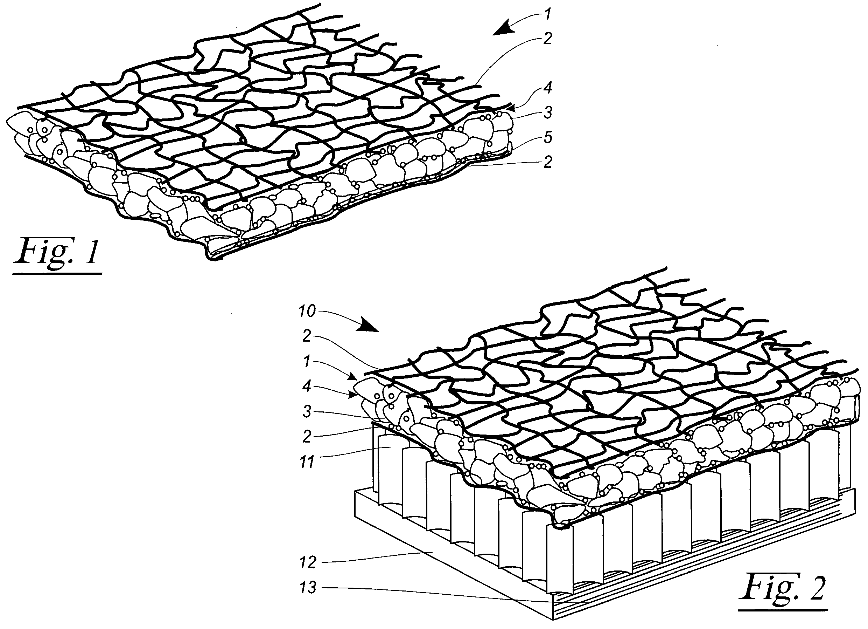

Die Figur 1 zeigt eine räumliche Darstellung eines kleinen Ausschnittes eines Polymerverbundwerkstoffes 1. Dieser weist zwei Lagen 2 eines thermoplastischen Polymers auf. Zwischen den beiden Lagen 2 ist geschreddertes und teilweise gemahlenes Altpolymer 3 mit darin eingebetteten Fasern eingeschweißt. Durch das teilweise Mahlen des Altpolymers 3 werden sehr unterschiedliche Korngrößen des Altpolymers 3 zu erzielt. Damit kann ein hoher Altpolymeranteil und geringer Harzanteil im Polymerverbundwerkstoff 1 erreicht werden. Dies reduziert die Kosten für das unvernetzte Harz und erhöht den Faseranteil im Polymerverbundwerkstoff 1. Die Lagen 2 aus thermoplastischem Polymer sind mit dem Altpolymer 3 verschweißt, so dass der Polymerverbundwerkstoff 1 einen sandwichartigen Aufbau in Form einer Matte besitzt. Damit lässt sich dieser Polymerverbundwerkstoff 1 einfach wie eine Matte handhaben. In Hohlräumen zwischen den Stücken aus Altpolymer 3 ist ein Harz 4 vorgesehen, welches vorzugsweise thermisch aktivierbar ist. Dieses Harz 4 bindet im ausgehärteten Zustand die Stücke aus Altpolymer 3 zusammen.

Für Anwendungen mit hohen Festigkeitsanforderungen sind zusätzlich im Polymerverbundwerkstoff 1 lange Fasern 5 vorgesehen. Diese Fasern 5 können einseitig oder beidseitig im Polymerverbundwerkstoff 1 angeordnet sein. Sie können in eine oder mehrere Richtungen ausgerichtet sein. Dies hängt von den konkreten Anforderungen an das aus dem Polymerverbundwerkstoff 1 zu fertigende Formteil ab.

Die Figur 2 zeigt eine räumliche Darstellung eines kleinen Ausschnittes eines Formteils 10, welches aus dem Polymerverbundwerkstoff 1 erstellt ist. Dieses Formteil 10 weist neben dem Polymerverbundwerkstoff 1 eine Wabe 11 aus zellulosehaltigem Material, insbesondere Wellpappe auf. Diese Wabe 11 sorgt für ein optimales Verhältnis aus Flächengewicht und Festigkeit des Formteils 10. Dem Polymerverbundwerkstoff 1 gegenüberliegend ist an der Wabe 11 ein in Polymer 12 gebundener Faserwerkstoff 13 vorgesehen. Alternativ kann die gegenüberliegende Seite der Wabe 11 auch unbehandelt oder mit dem Polymerverbundwerkstoff 1 versehen sein. Dies hängt von den jeweiligen Festigkeitsanforderungen des Formteils 10 ab.

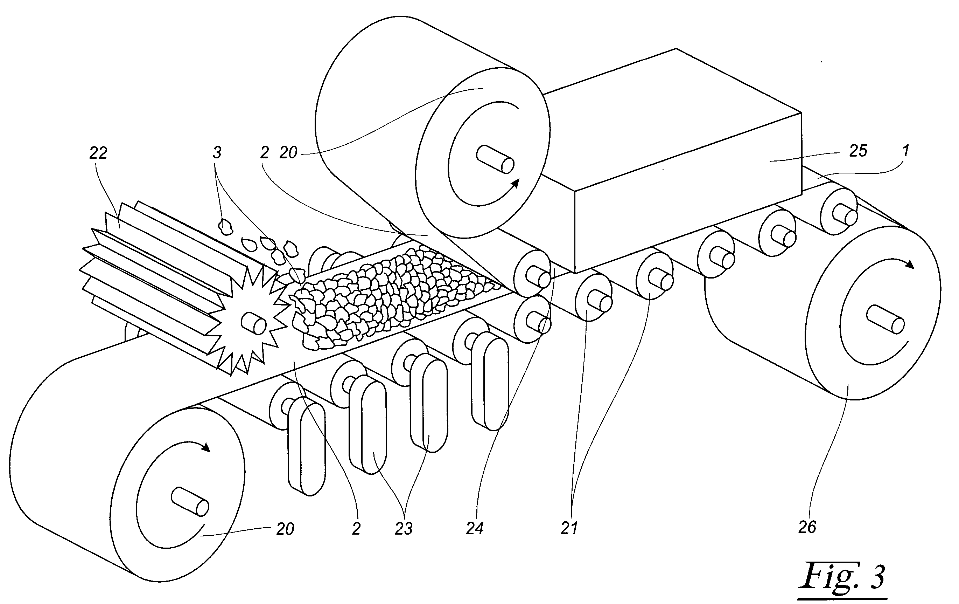

Das erfindungsgemäße Verfahren wird anhand der Prinzipdarstellung gemäß Figur 3 näher erläutert. Die untere Lage 2 besteht dabei aus einem Polypropylenvlies, welches von einem Wickel 20 abgewickelt wird. Die Lage 2 wird über rotierende Walzen 21 transportiert, wobei dieser Transport kontinuierlich erfolgt. Oberhalb der Lage 2 ist eine Streuwalze 22 vorgesehen, welche das Altpolymer 3 auf der unteren Lage 2 verteilt. Zur Erzielung einer größeren Dichte des Altpolymers 3 auf der Lage 2 sind die dem Wickel 20 unmittelbar folgenden Walzen 21 mit Rüttlern 23 versehen. Diese Rüttler 23 erzeugen Schwingungen in der vom Altpolymer 3 gebildeten Schüttung und erhöhen damit dessen Dichte.

Anschließend wird oberseitig zur Schüttung aus dem Altpolymer 3 eine weitere Lage 2 zugeführt, welche von einem weiteren Wickel 20 abgewickelt wird. Diese weitere Lage 2 bildet die Decklage des zu erstellenden Polymerverbundwerkstoffes 1. Soll der Polymerverbundwerkstoff 1 zusätzlich auch lange Fasern aufweisen, so werden diese vor der Streuwalze 22 oder unmittelbar vor der oberseitigen Lage 2 dem Materialstrom zugeführt.

Unmittelbar nach dem Ablegen der oberen Lage 2 wird das auf diese Weise gebildete Sandwich 24 durch einen Ofen 25 geführt. In diesem Ofen 25 wird das Sandwich 24 über die Plastifizierungstemperatur der Lagen 2 aufgeheizt und wieder unter dieser abgekühlt. Dabei verschweißen die Lagen 2 mit dem aufgeschütteten Altpolymer 3 und ergeben den mattenartigen Polymerverbundwerkstoff 1. Dieser wird abschließend auf einem Wickel 20 aufgewickelt und kann zwischengelagert oder unmittelbar verwendet werden.

Vorzugsweise wird ein Harz zur Bindung des Altpolymers 3 erst nach dem Abwickeln des Polymerverbundwerkstoffes 1 vom Wickel 20 und damit unmittelbar vor dessen Verwendung zugeführt. Dabei durchdringt dieses Harz die Lagen 2. Alternativ kann entsprechendes Harz auch unmittelbar nach der Streuwalze 22 über entsprechende Düsen dem Materialstrom zugeführt werden. Soll der Polymerverbundwerkstoff 1 zwischengelagert werden, ist in diesem Fall eine Verwendung eines thermisch aktivierbaren Harzes zweckmäßig. Dabei wird die Aktivierungstemperatur derart gewählt, dass sie oberhalb der Prozesstemperatur des Ofens 25 liegt, um eine vorzeitige Aktivierung des Harzes zu vermeiden.

### Bezugszeichenliste

- 1: Polymerverbundwerkstoff
- 2: Lage
- 3: Altpolymer
- 4: Harz
- 5: lange Faser
- 10: Formteil
- 11: Wabe
- 12: Polymer
- 13: Faserwerkstoff
- 20: Wickel
- 21: Walze
- 22: Streuwalze
- 23: Rüttler
- 24: Sandwich
- 25: Ofen

## Patentansprüche

1. Polymerverbundwerkstoff, der zugfeste Fasern und mindestens ein diese verbindendes Polymer aufweist, **dadurch gekennzeichnet, dass** wenigstens ein Teil des Polymerverbundwerkstoffes (1) aus recyceltem und zerkleinertem, mit Fasern verstärktem Altpolymer (3) besteht, welches zwischen Lagen (2) aus mindestens einem thermoplastischen Polymer eingeschweißt ist, wobei mindestens eine der Lagen (2) auch nach dem Schweißvorgang flüssigkeitsdurchlässig ist.

2. Polymerverbundwerkstoff nach Anspruch 1, **dadurch gekennzeichnet, dass** das mindestens eine thermoplastische Polymer ein Polyethylen oder Polypropylen ist.

3. Polymerverbundwerkstoff nach Anspruch 1 oder 2, **dadurch gekennzeichnet, dass** die mindestens eine flüssigkeitsdurchlässige Lage (2) von einem Spinnvlies gebildet ist.

4. Polymerverbundwerkstoff nach mindestens einem der Ansprüche 1 bis 3, **dadurch gekennzeichnet, dass** wenigstens ein Teil der Fasern (5) mindestens 10 cm lang sind.

5. Polymerverbundwerkstoff nach mindestens einem der Ansprüche 1 bis 4, **dadurch gekennzeichnet, dass** der Polymerverbundwerkstoff (1) unvernetztes Harz (4) enthält.

6. Verfahren zur Herstellung eines Polymerverbundwerkstoffes (1) nach mindestens einem der Ansprüche 1 bis 5, bei dem das mit Fasern verstärkte Altpolymer (3) zerkleinert wird, **dadurch gekennzeichnet, dass** das zerkleinerte Altpolymer (3) auf eine der Lagen (2) aus dem thermoplastischem Polymer aufgebracht und anschließend mit einer weiteren der Lagen (2) aus dem thermoplastischem Polymer abgedeckt wird, wonach der gebildete Sandwich (24) einem Temperschritt unterworfen wird, bei dem die Lagen (2) über deren Plastifizierungstemperatur erhitzt und anschließend wieder unter deren Plastifizierungstemperatur abgekühlt werden.

7. Verfahren nach Anspruch 6, **dadurch gekennzeichnet, dass** das Zerkleinern des Altpolymers (3) durch schreddern und/oder mahlen erfolgt.

8. Verfahren nach Anspruch 6 oder 7, **dadurch gekennzeichnet**, das die Lagen (2) beim Aufbringen des zerkleinerten Altpolymers (3) auf die Lage (2) kontinuierlich bewegt und das Aufbringen mittels mindestens einer Streuwalze (22) erfolgt.

9. Verfahren nach mindestens einem der Ansprüche 6 bis 8, **dadurch gekennzeichnet, dass** die Schicht aus zerkleinertem Altpolymer (3) ein Flächengewicht von mindestens 600 g/m² aufweist.

10. Verfahren zum Herstellen eines Formteils, **dadurch gekennzeichnet, dass** mindestens einem Polymerverbundwerkstoff nach mindestens einem der Ansprüche 1 bis 5 unvernetztes Harz (4) zugegeben und/oder das im Verbundwerkstoff gemäß Anspruch 5 enthaltene unvernetzte Harz (4) thermisch aktiviert wird, wonach der Polymerverbundwerkstoff (1) thermisch erhitzt und gepresst wird.

11. Verfahren nach Anspruch 10, **dadurch gekennzeichnet, dass** dem mindestens einen Polymerverbundwerkstoff (1) vor dem Pressvorgang mindestens eine Wabe (11) zugegeben wird.

12. Formteil, **dadurch gekennzeichnet, dass** es nach dem Verfahren gemäß Anspruch 10 oder 11 hergestellt ist.

## Claims

1. Polymer composite material which comprises high-tensile-strength fibres and at least one polymer binding the same, **characterized in that** at least a portion of the polymer composite material (1) is composed of recycled and comminuted used polymer (3) which has fibre reinforcement and which has been welded between layers (2) made of at least one thermoplastic polymer, where at least one of the layers (2) remains liquid-permeable after the welding procedure.

2. Polymer composite material according to Claim 1, **characterized in that** the at least one thermoplastic polymer is a polyethylene or polypropylene.

3. Polymer composite material according to Claim 1 or 2, **characterized in that** the at least one liquid-permeable layer (2) is composed of a spunbond non-woven.

4. Polymer composite material according to at least one of Claims 1 to 3, **characterized in that** the length of at least a portion of the fibres (5) is at least 10 cm.

5. Polymer composite material according to at least one of Claims 1 to 4, **characterized in that** the polymer composite material (1) comprises uncrosslinked resin (4).

6. Process for the production of a polymer composite material (1) according to at least one of Claims 1 to 5, by comminuting the used polymer (3) which has fibre reinforcement, **characterized in that** the comminuted used polymer (3) is applied to one of the layers (2) made of the thermoplastic polymer and then is covered by another of the layers (2) made of the thermoplastic polymer, and then the resultant sandwich (24) is subjected to a heat-conditioning step in which the layers (2) are heated above their plastification temperature and then in turn are cooled below their plastification temperature.

7. Process according to Claim 6, **characterized in that** the comminution of the used polymer (3) is achieved via shredding and/or grinding.

8. Process according to Claim 6 or 7, **characterized in that** during the application of the comminuted used polymer (3) to the layer (2) the layers (2) is continuously moved and the application is achieved by means of at least one scattering roll (22).

9. Process according at least one of Claims 6 to 8, **characterized in that** the weight per unit area of the layer made of comminuted used polymer (3) is at least 600 g/m².

10. Process for the production of a moulding, **characterized in that** uncrosslinked resin (4) is added to at least one polymer composite material according to at least one of Claims 1 to 5 and/or the uncrosslinked resin (4) present in the composite material according to Claim 5 is thermally activated, and then the polymer composite material (1) is heated and pressed.

11. Process according to Claim 10, **characterized in that**, before the pressing procedure, at least one honeycomb (11) is added to the at least one polymer composite material (1).

12. Moulding, **characterized in that** it has been produced by the process according to Claim 10 or 11.

## Revendications

1. Matériau composite polymère, qui comprend des fibres résistantes à la traction et au moins un polymère reliant celles-ci, **caractérisé en ce qu'**au moins une partie du matériau composite polymère (1) est constituée par un vieux polymère (3) recyclé et broyé, renforcé par des fibres, qui est soudé entre des couches (2) d'au moins un polymère thermoplastique, au moins une des couches (2) étant également perméable aux liquides après le processus de soudage.

2. Matériau composite polymère selon la revendication 1, **caractérisé en ce que** ledit au moins un polymère thermoplastique est un polyéthylène ou un polypropylène.

3. Matériau composite polymère selon la revendication 1 ou 2, **caractérisé en ce que** ladite au moins une couche perméable aux liquides (2) est formée par un tissu non-tissé.

4. Matériau composite polymère selon au moins l'une quelconque des revendications 1 à 3, **caractérisé en ce qu'**au moins une partie des fibres (5) sont d'au moins 10 cm de longueur.

5. Matériau composite polymère selon au moins l'une quelconque des revendications 1 à 4, **caractérisé en ce que** le matériau composite polymère (1) contient une résine non réticulée (4).

6. Procédé de fabrication d'un matériau composite polymère (1) selon au moins l'une quelconque des revendications 1 à 5, selon lequel le vieux polymère (3) renforcé avec des fibres est broyé, **caractérisé en ce que** le vieux polymère broyé (3) est appliqué sur une des couches (2) en polymère thermoplastique, puis recouvert avec une autre des couches (2) en polymère thermoplastique, le sandwich formé (24) étant ensuite soumis à une étape de recuit, lors de laquelle les couches (2) sont chauffées au-dessus de leur température de plastification, puis de nouveau refroidies en dessous de leur température de plastification.

7. Procédé selon la revendication 6, **caractérisé en ce que** le broyage du vieux polymère (3) a lieu par déchiquetage et/ou mouture.

8. Procédé selon la revendication 6 ou 7, **caractérisé en ce que** les couches (2) est déplacée en continu lors de l'application du vieux polymère broyé (3) sur la couche (2) et l'application a lieu au moyen d'au moins un cylindre d'épandage (22).

9. Procédé selon au moins l'une quelconque des revendications 6 à 8, **caractérisé en ce que** la couche de vieux polymère broyé (3) présente un poids surfacique d'au moins 600 g/m².

10. Procédé de fabrication d'une pièce moulée, **caractérisé en ce qu'**une résine non réticulée (4) est ajoutée à au moins un matériau composite polymère selon au moins l'une quelconque des revendications 1 à 5 et/ou la résine non réticulée (4) contenue dans le matériau composite selon la revendication 5 est activée thermiquement, puis le matériau composite polymère (1) est chauffé thermiquement et comprimé.

11. Procédé selon la revendication 10, **caractérisé en ce qu'**au moins un nid d'abeilles (11) est ajouté audit au moins un matériau composite polymère (1) avant le processus de compression.

12. Pièce moulée, **caractérisée en ce qu'**elle est fabriquée par le procédé selon la revendication 10 ou 11.
